# EUROPÄISCHE PATENTSCHRIFT

(11) **EP 3 881 308 B1**
(45) Veröffentlichungstag und Bekanntmachung des Hinweises auf die Patenterteilung: **16.10.2024**
(21) Anmeldenummer: 19798115.2
(22) Anmeldetag: 11.11.2019
(51) Int. Cl.: G09F 3/00, G09F 3/10, G09F 3/02

(54) **BESCHRIFTUNGSMATERIAL**
LABELLING MATERIAL
MATÉRIAU POUR INSCRIPTION

(30) Priorität: 13.11.2018 BE 201805798
(43) Veröffentlichungstag der Anmeldung: 22.09.2021
(73) Patentinhaber: PHOENIX CONTACT GmbH & Co. KG, 32825 Blomberg (DE)
(72) Erfinder: OSTER, Patrick, 32657 Lemgo (DE); HOFMANN, Alexander, 31789 Hameln (DE)
(74) Vertreter: Richly & Ritschel Patentanwälte PartG mbB
(86) Internationale Anmeldenummer: PCT/EP2019/080880
(87) Internationale Veröffentlichungsnummer: WO 2020/099327

(56) Entgegenhaltungen:
- EP-A2- 0 656 614
- EP-A2- 0 917 124
- EP-B1- 2 374 118
- DE-A1- 102015 115 176

## Beschreibung

Die vorliegende Erfindung betrifft ein Beschriftungsmaterial nach Anspruch 1, mit einem Beschriftungsbereich, der zum Bedrucken mit einer Druckvorrichtung und/oder zum handschriftlichen Beschriften eingerichtet ist, mit einer Trägerschicht, die zumindest abschnittsweise transparent ist und die zum Abdecken oder Versiegeln des Beschriftungsbereichs auf den Beschriftungsbereich umklappbar und mit diesem abschnittsweise oder vollflächig verklebbar ist, und mit einem oder mehreren Klebebereichen, wie einer Klebeschicht, Klebepunkten, Klebestreifen oder dergleichen, die zum abschnittsweisen oder vollflächigen Verkleben der zumindest abschnittsweise transparenten Trägerschicht mit dem Beschriftungsbereich eingerichtet ist.

Bedruckbare Beschriftungsmaterialien dienen dazu Objekte in einfacher Weise zu kennzeichnen. Insbesondere für die Kennzeichnung von Elektroinstallationen gilt, dass die Beschriftung auch nach längerer Zeit noch eindeutig erkennbar und zuverlässig an dem Objekt befestigt sein muss. Sollte sich z.B. das Beschriftungsmaterial einer oder mehrerer Anlagen, Schaltschränke, Klemmen, Kabel oder dergleichen aufgrund von Umgebungseinflüssen lösen oder unlesbar sein, kann eine zeitaufwändige erneute Zuordnung anhand der Installationspläne erforderlich sein oder die Wartung eines Geräts erschwert werden.

Dokumenten EP 0 917 124 A2, EP 0 656 614 A2 und DE 10 2015 115176 A1 offenbaren Beschriftungsmaterialen nach dem Obergriff des Anspruchs 1.

Das Dokument EP 2 374 118 B1 beschreibt ein Beschriftungsmaterial mit einer transparenten Schutzlage, die über einen Druckbereich gelegt werden kann. Das Beschriftungsmaterial ist dazu vorgesehen, mit seiner Klebeschicht um ein Rundkabel gewickelt zu werden, wobei der Druckbereich im fertig an einem Rundkabel montierten Zustand durch einen überlappenden Teilabschnitt transparenten Materials überklebt ist. Das Beschriftungsmaterial gemäß EP 2 374 118 B1 ist nicht dazu geeignet, als eben bzw. plan zu montierendes Beschriftungsmaterial installiert zu werden. Vor diesem Hintergrund liegt der Erfindung die technische Problemstellung zugrunde, ein einfach und kostengünstig herstellbares Beschriftungsmaterial anzugeben, das eben bzw. plan unter gleichzeitig schützend transparenter Abdeckung des Druckbereichs montierbar ist.

Die voranstehend beschriebene, technische Problemstellung wird gelöst durch Beschriftungsmaterial nach Anspruch 1. Weitere Ausgestaltungen ergeben sich aus den abhängigen Ansprüchen und der nachstehenden Beschreibung.

Die Erfindung betrifft ein Beschriftungsmaterial, mit einem Beschriftungsbereich, der zum Bedrucken mit einer Druckvorrichtung und/oder zum handschriftlichen Beschriften eingerichtet ist, mit einer Trägerschicht, die zumindest abschnittsweise transparent ist und die zum Abdecken oder Versiegeln des Beschriftungsbereichs auf den Beschriftungsbereich umklappbar und abschnittsweise oder vollflächig mit diesem verklebbar ist, mit einem oder mehreren Klebebereichen, wie einer Klebeschicht, Klebepunkten, Klebestreifen oder dergleichen, die zum abschnittsweisen oder vollflächigen Verkleben der zumindest abschnittsweise transparenten Trägerschicht mit dem Beschriftungsbereich eingerichtet ist. Der Klebebereich und der Beschriftungsbereich sind auf derselben Seite der zumindest abschnittsweise transparenten Trägerschicht angeordnet.

Dadurch, dass der Klebebereich und der Beschriftungsbereich auf derselben Seite der zumindest abschnittsweise transparenten Trägerschicht angeordnet sind, kann in einfacher und kostengünstiger Weise ein Beschriftungsmaterial angegeben werden, das flächig, insbesondere eben bzw. plan, unter gleichzeitig schützend transparenter Abdeckung des Beschriftungsbereichs montierbar ist, in dem die Trägerschicht mit einem zumindest teilweise transparenten Bereich auf den Beschriftungsbereich geklappt wird.

Ein teilweises oder abschnittweises Verkleben kann z.B. dadurch erreicht werden, dass lediglich randseitig oder punktuell Klebemittel vorhanden ist. Ein vollflächiges Verkleben kann z.B. durch eine unterbrechungsfrei durchgehende Klebeschicht erreicht werden. Auf diese Weise kann eine Versiegelung zum Schutz des Beschriftungsbereichs erreicht werden.

Dabei kann vorgesehen sein, dass die Trägerschicht in einem Schnitt quer zur Längserstreckung betrachtet im Wesentlichen mittig gefaltet wird.

Insbesondere kann vorgesehen sein, dass ein Umklappen durch ein Annähern oder Aufeinanderlegen von Längskanten der Trägerschicht erfolgt, wobei die Längskanten nach dem Umklappen insbesondere in einer gemeinsamen Planebene angeordnet sind.

Es kann vorgesehen sein, dass die Trägerschicht einen Bereich hat, der den Beschriftungsbereich bildet, wobei die Trägerschicht unmittelbar von einer Druckvorrichtung bedruckbar ist, wie einem Tintenstrahldrucker, einem Thermotransferdrucker, einem Laserdrucker oder dergleichen.

Gleichermaßen kann der Bereich der Trägerschicht, der den Beschriftungsbereich bildet, zum handschriftlichen Beschriften eingerichtet sein.

Alternativ oder ergänzend kann ein zu beschriftendes oder beschriftetes oder bedrucktes Inlay bereitgestellt werden, das im Druckbereich aufgelegt und durch Umklappen der Trägerschicht eingefasst werden kann.

Das Versiegeln erfolgt insbesondere dann, wenn der Beschriftungsbereich insbesondere bedruckt, beschriftet oder mit einem Inlay versehen sein.

Es kann vorgesehen sein, dass der Beschriftungsbereich und die Klebeschicht in einem aufgeklappten Zustand, in dem die Klebeschicht nicht mit dem Beschriftungsbereich verklebt ist, zueinander benachbart und aneinander angrenzend angeordnet sind.

Alternativ oder ergänzend kann vorgesehen sein, dass der Beschriftungsbereich in einem Querschnitt betrachtet eine Höhe aufweist, die einer Höhe eines auf den Beschriftungsbereich umklappbaren Klappabschnitts entspricht. Der Klappabschnitt kann zum flächigen Bedecken des Beschriftungsbereichs eingerichtet sein, insbesondere zum vollständig flächigen Bedecken des Beschriftungsbereichs eingerichtet sein.

Nach einer alternativen Ausgestaltung kann vorgesehen sein, dass der Beschriftungsbereich durch eine Bedruckschicht gebildet ist, die auf die Trägerschicht aufgebracht ist. Die Bedruckschicht kann von einer Druckvorrichtung bedruckbar sein, wie einem Tintenstrahldrucker, einem Thermotransferdrucker, einem Laserdrucker oder dergleichen.

Die Bedruckschicht kann auf die Trägerschicht aufgeklebt sein, wobei insbesondere eine nicht zerstörungsfrei lösbare Klebeverbindung zwischen der Bedruckschicht und der Klebeschicht gebildet ist.

Die Bedruckschicht kann stoffschlüssig mit der Trägerschicht verbunden sein, insbesondere verschweißt sein.

Es kann vorgesehen sein, dass die Bedruckschicht eine einlagige Folie ist. So kann die Bedruckschicht in einfacher und kostengünstiger Weise bereitgestellt werden.

Alternativ kann die Bedruckschicht eine mehrlagige Folie sein. Dabei kann z.B. eine erste Lage zum Bedrucken mit einem Tintenstahl- oder Thermotransferdrucker eingerichtet sein, und eine zweite Lage zum Herstellen einer Verbindung zu der Trägerschicht eingerichtet sein.

Die Bedruckschicht kann eine Beschichtung oder Lackierung sein, die auf die Trägerschicht aufgebracht ist.

Die Bedruckschicht kann abschnittsweise oder vollflächig an der Trägerschicht gebildet sein.

Zwischen der Bedruckschicht, die als Folie und/oder Beschichtung bereitgestellt werden kann, und der Trägerschicht kann eine Zwischenlage vorgesehen sein, insbesondere als Haftvermittler.

Nach einer weiteren Ausgestaltung des Beschriftungsmaterials ist vorgesehen, dass die zumindest abschnittsweise transparente Trägerschicht eine einlagige Folie ist. So kann die Trägerschicht in einfacher und kostengünstiger Weise bereitgestellt werden.

Alternativ kann die Trägerschicht eine mehrlagige Folie sein. So kann eine erste Lage der Trägerschicht eine größere Dicke aufweisen und/oder eine höhere Steifigkeit haben, als eine zweite Lage der Trägerschicht, um die Trägerschicht für einen Druckvorgang auszusteifen. Alternativ oder ergänzend kann z.B. eine Lage der Trägerschicht als transparente Lage gebildet sein, und eine weitere Lage zum Herstellen einer Verbindung zu der Bedruckschicht eingerichtet sein.

Gemäß einer weiteren Ausgestaltung des Beschriftungsmaterials ist vorgesehen, dass die Trägerschicht vollständig aus einem transparenten Material gebildet ist. So kann die Trägerschicht in einfacher und kostengünstiger Weise bereitgestellt werden. Insbesondere kann die Trägerschicht eine einlagige Schicht sein, die aus einem transparenten Material besteht.

Wenn vorliegend von einem "transparenten Material" gesprochen wird, so bedeutet dies, dass das Material derart lichtdurchlässig ist, dass Schriftzeichen oder Symbole des Beschriftungsbereichs im bedruckten Zustand nach dem Abdecken mit dem Trägermaterial weiterhin sichtbar sind.

Eine weitere Ausgestaltung des Beschriftungsmaterials ist gekennzeichnet durch ein Deckblatt, wie eine Abziehfolie oder dergleichen, wobei der Klebebereich, die zum Verkleben der zumindest abschnittsweise transparenten Trägerschicht mit dem Beschriftungsbereich eingerichtet ist, mit dem Deckblatt bedeckt ist, und wobei das Deckblatt zum Freilegen des Klebebereichs entfernbar ist.

Das Deckblatt ermöglicht daher in einfacher Weise ein Abdecken des Klebebereichs für einen Transport, eine Lagerung und einen Druckvorgang. Nach dem Entfernen des Deckblatts bildet der Klebebereich einen Haftbereich, insbesondere eine Haftfläche, an der der Beschriftungsbereich im geklappten Zustand des Beschriftungsmaterials dauerhaft anhaftet. Der Klebebereich ist ebenfalls transparent in dem Sinne, dass Schriftzeichen oder Symbole des Beschriftungsbereichs im beschrifteten Zustand nach dem Verkleben weiterhin sichtbar sind.

Nach einer weiteren Ausgestaltung des Beschriftungsmaterials weist das Deckblatt eine Ablösehilfe auf, wie eine Lasche, einen Schlitz oder dergleichen, die insbesondere zumindest abschnittsweise zu der Trägerschicht beabstandet angeordnet sein kann. Die Ablösehilfe ermöglicht einem Benutzer ein einfaches Abziehen bzw. Lösen der des Deckblatts von dem Klebebereich.

Um ein selbsthaftendes Beschriftungsmaterial anzugeben, das ohne zusätzliche Befestigungsmittel an einem zu beschriftenden Objekt befestigt werden kann, ist eine weitere Ausgestaltung des Beschriftungsmaterials vorgesehen, gekennzeichnet durch einen weiteren Klebebereich, wie eine Klebschicht, Klebepunkte, Klebestreifen oder dergleichen, zum Befestigen des Beschriftungsmaterials an einem zu markierenden Objekt, wobei der Klebebereich auf einer dem Beschriftungsbereich abgewandten Seite der Trägerschicht angeordnet ist. Somit kann ein weiterer zusätzlicher Klebebereich vorgesehen sein, der als Befestigungsmittel dient, und zu demjenigen Klebebereich, der zum Verkleben der zumindest abschnittsweise transparenten Trägerschicht mit dem Beschriftungsbereich eingerichtet ist, beabstandet ist.

Insbesondere sind der Klebebereich, der zum Verkleben der zumindest abschnittsweise transparenten Trägerschicht mit dem Beschriftungsbereich eingerichtet ist, und der weitere Klebebereich, der als Befestigungsmittel dient, im geklappten sowie im nicht geklappten Zustand des Beschriftungsmaterials jederzeit mindestens um die Dicke bzw. Wandstärke der Trägerschicht zueinander beabstandet angeordnet.

Der weitere Klebebereich kann in einem Querschnitt betrachtet auf Höhe des Beschriftungsbereichs angeordnet sein.

Der weitere Klebebereich kann in einem Querschnitt betrachtet, in einem aufgeklappten Zustand, auf Höhe eines Klappabschnitts angeordnet ist. Diese Anordnung ermöglicht ein spiegelverkehrtes Beschriften des Beschriftungsbereichs.

Um den weiteren Klebebereich, der als Befestigungsmittel dient, während eines Beschriftungs- oder Druckvorgangs sowie während Lagerung und Transport zu schützen und um ein Verunreinigen zu verhindern, ist der weitere Klebebereich nach einer weiteren Ausgestaltung des Beschriftungsmaterials von einem Deckblatt bedeckt, das zum Freilegen des weiteren Klebebereichs entfernbar ist. Das Deckblatt kann zudem zur Stabilisierung bzw. Aussteifung des Beschriftungsmaterials für einen Druckvorgang dienen. Nach dem Entfernen des Deckblatts bildet der weitere Klebebereich einen Haftbereich, insbesondere eine Haftfläche, mit dem das Beschriftungsmaterial im fertig montierten Zustand an einem zu beschriftenden Objekt anhaftet. Ein zu beschriftendes Objekt kann z.B. eine Maschine, wie eine Produktionsmaschine, eine Prüfmaschine, eine Messmaschine oder dergleichen sein.

Das Deckblatt kann einlagig oder mehrlagig ausgeführt sein.

Das Deckblatt kann Kunststoff und/oder Pappe bzw. Papier aufweisen oder aus Kunststoff oder Pappe bzw. Papier gebildet sein. Das Deckblatt kann eine Stützschicht sein. Das Deckblatt ist insbesondere derart entfernbar, dass die weitere Klebeschicht im Wesentlichen vollständig an dem Beschriftungsmaterial, insbesondere der Trägerschicht, verbleibt.

Eine weitere Ausgestaltung des Beschriftungsmaterials zeichnet sich dadurch aus, dass die Trägerschicht einen Klappabschnitt hat, der zum Abdecken des Beschriftungsbereichs auf den Beschriftungsbereich umklappbar und mit diesem verklebbar ist, wobei der Klebebereich, der zum Verkleben der zumindest abschnittsweise transparenten Trägerschicht mit dem Beschriftungsbereich im bedruckten Zustand eingerichtet ist, an dem Klappabschnitt vorgesehen ist, und wobei der Klappabschnitt auf einer dem Klebebereich abgewandten Seite der Trägerschicht keinen Klebebereich aufweist, insbesondere klebemittelfrei ist, und dass die Trägerschicht einen Beschriftungsabschnitt hat, der in einer Höhenerstreckung des Beschriftungsmaterials betrachtet benachbart zu und angrenzend an den Klappbereich angeordnet ist, wobei der Beschriftungsbereich an dem Beschriftungsabschnitt vorgesehen ist, wobei der weitere Klebebereich auf einer dem Beschriftungsbereich abgewandten Seite des Beschriftungsabschnitts angeordnet ist, und wobei der weitere Klebebereich und der Bereich des Klappabschnitts, der keinen Klebebereich aufweist, insbesondere kleberfrei, zueinander benachbart und aneinander angrenzend angeordnet sind. So kann in einfacher und kostengünstiger Weise ein bedruckbares Beschriftungsmaterial angegeben werden, das selbstklebend ist und zudem, im geklappten Zustand, einen geschützten Beschriftungsbereich aufweist.

Um das Beschriftungsmaterial automatisiert detektierbar auszuführen, z.B. für Anwendungen in der Lebensmittelindustrie, kann vorgesehen sein, dass das Beschriftungsmaterial eine Metallkomponente aufweist, wie eine oder mehrere metallische Lagen, Metallpartikel, Metallfäden oder dergleichen. Die eine oder mehreren metallischen Komponenten können in eine Schicht des Beschriftungsmaterials eingearbeitet sein oder zwischen zwei Schichten des Beschriftungsmaterials aufgenommen sein. Die eine oder mehreren metallischen Komponenten können auf eine Schicht des Beschriftungsmaterials aufgesetzt, formschlüssig verbunden und/oder verklebt sein. Die Metallkomponente kann ein RFID-Tag aufweisen.

Erfindungsgemäß weist das Beschriftungsmaterial einen lösbaren Haftstreifen auf, der Längskanten der Trägerschicht in einem geklappten Grundzustand der Trägerschicht fixiert, wobei die Trägerschicht in dem geklappten Grundzustand im Querschnitt betrachtet insbesondere mittig gefaltet ist. Auf diese Weise kann insbesondere ein zuverlässiges Bedrucken des Beschriftungsmaterials erfolgen. Das Beschriftungsmaterial kann einen oder mehrere Kunststoffe aufweisen oder aus einem oder mehreren Kunststoffen bestehen. Das Beschriftungsmaterial kann auf einer Rolle aufgewickelt bereitgestellt werden.

Die Trägerschicht kann eine Klarsicht-PET-Folie sein, insbesondere mit einer Dicke von ca. 50pm.

Der Klebebereich kann eine Akryl-Schicht sein, insbesondere mit einer Dicke von ca. 20um.

Die Bedruckschicht kann z.B. eine für den Thermotransferdruck geeignete PET-Schicht sein, insbesondere mit einer Dicke von ca. 50pm.

Der weitere Klebebereich kann eine Akryl-Schicht sein, insbesondere mit einer Dicke von ca. 20um.

Das Deckblatt des Klebebereichs kann eine HDPE-Schicht sein, wobei die Abkürzung "HDPE" für "high-density polyethylene" steht.

Das Beschriftungsmaterial kann eine Sollklappstelle bzw. Umklapphilfe bzw. Falthilfe aufweisen, die insbesondere als Vorformung, Ausstanzung, Verjüngung, Vorfaltung oder lokale Schwächung, insbesondere eine Perforation, zwischen dem Klappabschnitt und dem Beschriftungsabschnitt vorgesehen ist. So kann das Umklappen für einen Benutzer erleichtert werden, so dass eine definierte Faltlinie gebildet wird, und ein zuverlässiges Abdecken bzw. Versiegeln des Beschriftungsabschnitts ermöglicht wird.

Die Sollklappstelle bzw. Umklapphilfe bzw. Falthilfe kann geradlinig erstreckt und insbesondere quer zu einer Höhenerstreckung, quer zu einer Dickenerstreckung und entlang einer Längserstreckung des Beschriftungsmaterials orientiert sein. Insbesondere ist die Sollklappstelle bzw. Umklapphilfe entlang der gesamten Längserstreckung.

Die Sollklappstelle bzw. Umklapphilfe kann als Filmscharnier gebildet sein.

Nachfolgend wird die Erfindung anhand einer Ausführungsbeispiele darstellenden Zeichnung näher beschrieben. Es zeigen jeweils schematisch:
- Fig. 1: ein erfindungsgemäßes Beschriftungsmaterial;
- Fig. 2: das Beschriftungsmaterial aus Fig. 1 in einer Explosionsdarstellung;
- Fig. 3: das Beschriftungsmaterial in einem fertig montierten Zustand;
- Fig. 4A: das Beschriftungsmaterial in einem geklappten Grundzustand;
- Fig. 4B: ein weiteres Beschriftungsmaterial in einem geklappten Grundzustand;
- Fig. 5: ein weiteres Beschriftungsmaterial.

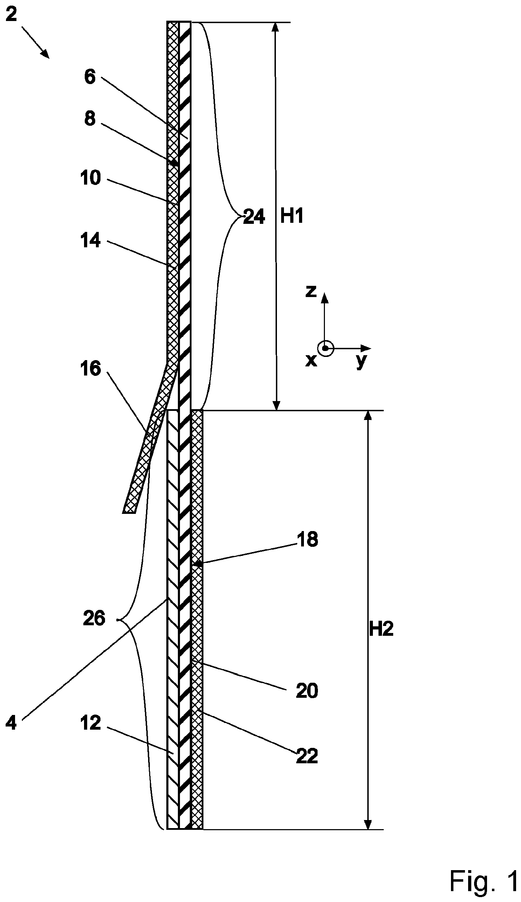

Fig. 1 zeigt ein Beschriftungsmaterial 2, mit einem Beschriftungsbereich 4, der zum Bedrucken mit einer Druckvorrichtung eingerichtet ist.

Das Beschriftungsmaterial 2 hat eine Trägerschicht 6, die zumindest abschnittsweise transparent ist und die zum Abdecken des Beschriftungsbereichs 4 im bedruckten Zustand auf den Beschriftungsbereich 4 umklappbar und mit diesem verklebbar ist.

Auf einer ersten Seite 8 der Trägerschicht 6 ist ein erster Klebebereich in Form einer Klebeschicht 10 gebildet, die zum Verkleben der Trägerschicht 6 mit dem Beschriftungsbereich 4 eingerichtet ist. Die Klebeschicht 10 und der Beschriftungsbereich 4 sind auf derselben Seite 8 der Trägerschicht 6 angeordnet.

Zur besseren Nachvollziehbarkeit der nachstehenden Ausführungen wird das in Fig. 1 dargestellte Koordinatensystem eingeführt, wobei die x-Achse parallel zu einer Längserstreckung des Beschriftungsmaterials 2 orientiert ist, die y-Achse eine Dicken- bzw. Wandstärkenrichtung des Beschriftungsmaterials 2 bezeichnet, entlang derer eine Dicke bzw. eine Wandstärke des Beschriftungsmaterials 2 bzw. einzelner Schichten bestimmt wird, und wobei die z-Achse eine Höhenerstreckung des Beschriftungsmaterials definiert, entlang derer eine Höhe einzelner Abschnitte des Beschriftungsmaterials 2 bzw. des Beschriftungsmaterials 2 insgesamt gemessen wird.

Der Beschriftungsbereich 4 ist vorliegend durch eine Bedruckschicht 12 gebildet, die auf die Trägerschicht 6 an deren erster Seite 8 aufgebracht ist. Die Bedruckschicht 12 ist vorliegend eine einlagige Folie, die zum Beschriften mithilfe eines Thermotransferdruckers eingerichtet ist.

Die Trägerschicht 6 besteht vorliegend aus einer transparenten, einlagigen Folie 6. Die Trägerschicht 6 ist vorliegend aus einem transparenten Kunststoffmaterial gebildet.

Auf der ersten Seite 8 der Trägerschicht 6 ist ein Deckblatt in Form einer Abziehfolie 14 angebracht. Die Klebeschicht 10 ist mithilfe der Abziehfolie 14 bedeckt, wobei die Abziehfolie 14 zum Freilegen der Klebeschicht 10 abziehbar bzw. ablösbar ist. Die Abziehfolie 14 ist demnach derart von der Klebeschicht 10 abziehbar, dass die Klebeschicht 10 im Wesentlichen vollständig an der ersten Seite 8 der Trägerschicht 6 anhaftend verbleibt.

Die Abziehfolie 14 weist eine Ablösehilfe in Form einer Lasche 16 auf, die zu der Trägerschicht 6 beabstandet angeordnet ist.

Auf einer der ersten Seite 8 der Trägerschicht 6 abgewandten zweiten Seite 18 der Trägerschicht 6 ist ein weiterer Klebebereich in Form einer weiteren Klebeschicht 20 angeordnet. Die Klebeschicht 20 ist zum Befestigen des Beschriftungsmaterials 2 an einem zu markierenden Objekt eingerichtet. Demnach ist die Klebeschicht 20 auf der dem Beschriftungsbereich 4 abgewandten Seite 18 der Trägerschicht 6 angeordnet.

Die weitere Klebeschicht 20 ist von einem Deckblatt in Form einer Stützschicht 22 bedeckt, die zum Freilegen der weiteren Klebeschicht 20 ablösbar bzw. abziehbar ist. Die Stützschicht 22 ist derart von der Klebeschicht 20 abziehbar, dass die Klebeschicht 20 im Wesentlichen vollständig auf der zweiten Seite 18 des Trägermaterials 16 verbleibt.

Die Trägerschicht 6 hat einen Klappabschnitt 24, der zum Abdecken des Beschriftungsbereichs 4 im bedruckten Zustand auf den Beschriftungsbereich 4 umklappbar und mithilfe der Klebeschicht 10 mit diesem verklebbar ist. Der Klappabschnitt 24 erstreckt sich in Höhenrichtung entlang der Höhe H1.

Die Klebeschicht 10 ist an dem Klappabschnitt 24 vorgesehen, wobei der Klappabschnitt 24 auf der der Klebeschicht 10 abgewandten Seite 18 der Trägerschicht 6 keine Klebeschicht aufweist bzw. kleberfrei ist.

Die Trägerschicht 6 hat weiter einen Druckabschnitt 26, der in Höhenerstreckung entlang der z-Achse des Beschriftungsmaterials 2 betrachtet benachbart zu und angrenzend an den Klappabschnitt 24 angeordnet ist.

Der Beschriftungsbereich 4 ist an dem Druckabschnitt 26 der Trägerschicht 6 vorgesehen. Die weitere Klebeschicht 20 ist auf der dem Beschriftungsbereich 4 abgewandten Seite 18 des Druckabschnitts 26 angeordnet. Die weitere Klebeschicht 20 und der Bereich des Klappabschnitts 24, der keine Klebeschicht aufweist, sind auf der Seite 18 zueinander benachbart und aneinander angrenzend angeordnet.

Der Druckabschnitt 26 erstreckt sich in Höhenrichtung z entlang der Höhe H2. Die Gesamthöhe des Beschriftungsmaterials 2 entspricht daher im nicht geklappten Zustand H1+H2.

Gemäß weiteren Ausgestaltungen des Beschriftungsmaterials kann vorgesehen sein, dass die Trägerfolie 6 in dem Beschriftungsbereich 26 selbst bedruckbar ist, sodass keine separate Bedruckschicht 12 auf der Trägerschicht 6 erforderlich ist.

Das Beschriftungsmaterial 2 weist eine Metallkomponente (nicht dargestellt) auf, die zum automatisierten Detektieren des Beschriftungsmaterials eingerichtet ist, insbesondere für die Lebensmittelindustrie. Es versteht sich, dass gemäß alternativer Ausführungsbeispiele auf eine derartige Metallkomponente verzichtet werden kann.

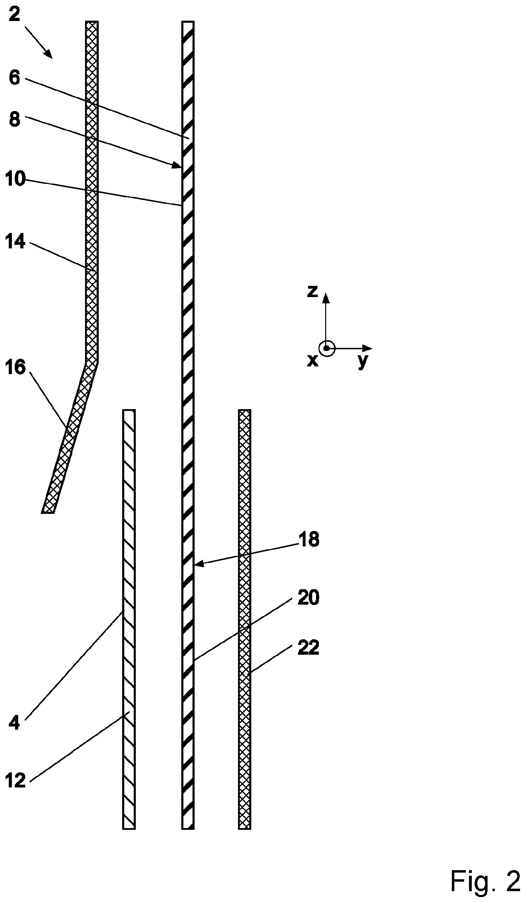

Zur besseren Nachvollziehbarkeit des Aufbaus des Beschriftungsmaterials ist das Beschriftungsmaterial 2 in Fig. 2 in einer Explosionsdarstellung gezeigt, um die Schichten vereinzelt sichtbar zu machen.

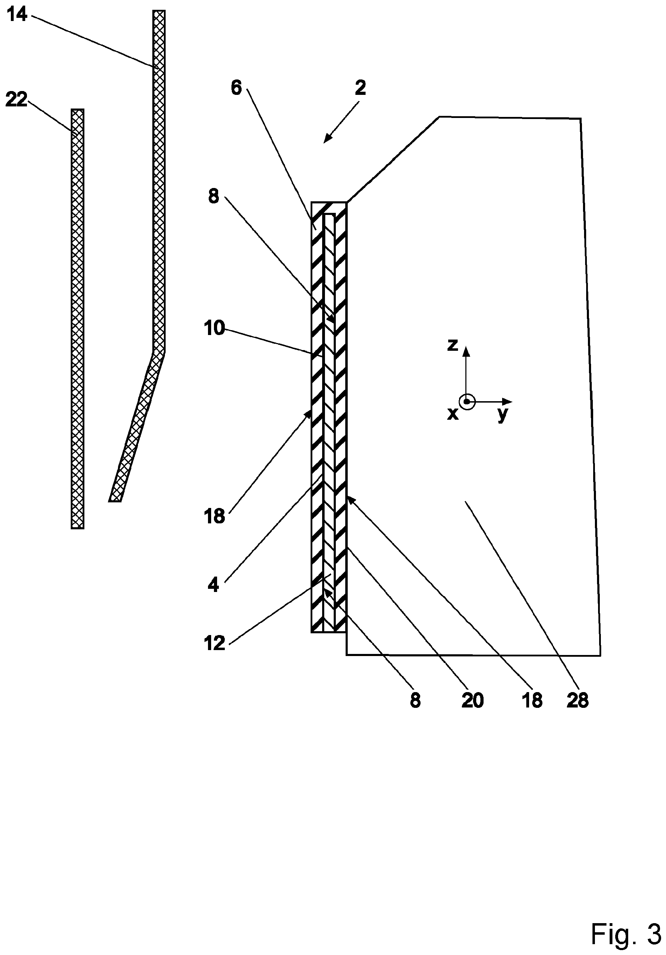

Fig. 3 zeigt das Beschriftungsmaterial aus den Figuren 1 und 2 in einem fertig montierten Zustand. Dazu ist das Beschriftungsmaterial 2 zunächst in dem in Fig. 1 dargestellten Zustand einer Druckvorrichtung zugeführt worden, wobei der Beschriftungsbereich 4 mit Symbolen oder Zeichen bedruckt worden ist. Anschließend ist die Abziehfolie 14 entfernt worden (Fig. 3), und der Klappbereich 24 auf den Beschriftungsbereich 4 umgeklappt worden, um die erzeugte Beschriftung mithilfe der durch die Trägerfolie 6 gebildeten, transparenten Abdeckung vor Umgebungseinflüssen zu schützen.

Im nächsten Schritt ist die Stützschicht 22 entfernt worden, um die weitere Klebeschicht 20 freizulegen. Abschließend wurde das Beschriftungsmaterial 2 mithilfe der weiteren Klebeschicht 20 auf dem zu beschriftenden Objekt 28 appliziert und mit diesem verklebt. Die Abziehfolie 14 und die Stützschicht 22 gemäß Fig. 3 können als Abfall entsorgt werden und haben keine weitere Funktion.

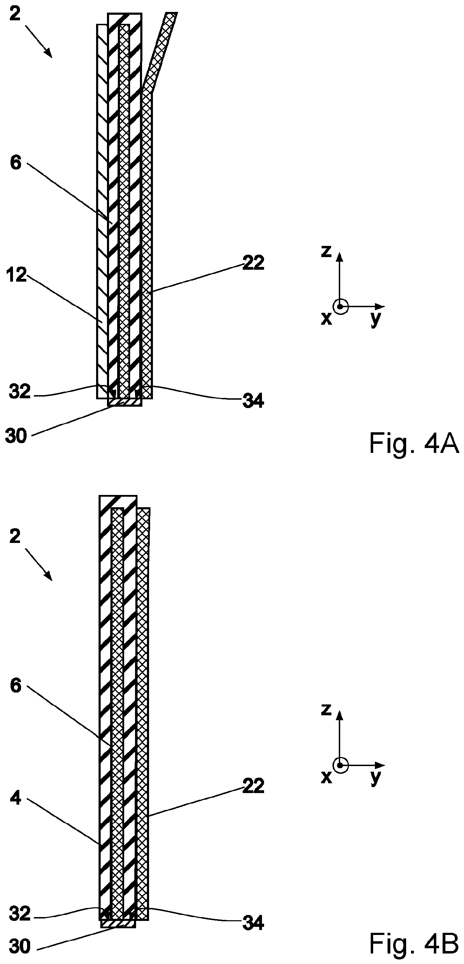

Ein Beschriftungsmaterial 2 kann in einem geklappten Grundzustand gemäß Fig. 4A bereitgestellt werden, der zum Zuführen zu einer Druckeinrichtung vorgesehen ist.

Das Beschriftungsmaterial 2 ist gekennzeichnet durch einen lösbaren Haftstreifen 30, der Längskanten 32, 34 der Trägerschicht in dem geklappten Grundzustand der Trägerschicht 6 fixiert bzw. hält, wobei die Trägerschicht 6 in dem geklappten Grundzustand im Querschnitt betrachtet insbesondere mittig gefaltet ist. Durch den Haftstreifen 30 kann der geklappte Grundzustand während eines Bedruckens zuverlässig gesichert werden.

Nach dem Bedrucken wird der Haftstreifen 30 insbesondere rückstandsfrei entfernt, so dass die Längskanten nicht mehr fixiert bzw. gehalten sind und das Beschriftungsmaterial in den in Fig. 1 gezeigten aufgeklappten Zustand aufgeklappt werden kann. Anschließend können die Deckblätter entfernt, der Beschriftungsbereich versiegelt und das Beschriftungsmaterial aufgeklebt werden (vgl. Fig. 3).

Fig. 4B zeigt eine Variante des Beschriftungsmaterials, wobei der Beschriftungsbereich 4 Teil der Trägerschicht 6 ist, die unmittelbar bedruckt oder beschriftet werden kann.

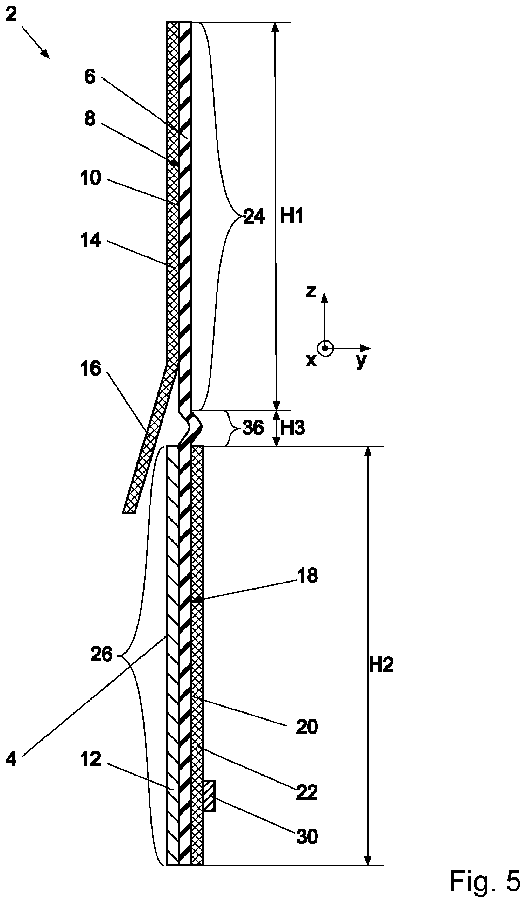

Fig. 5 zeigt eine weitere Variante des Beschriftungsmaterials, wobei ein Haftstreifen 30 zum Halten eines den Fig. 4A und 4B vergleichbaren, geklappten Zustands. Gemäß der Variante nach Fig. 5 dient der Haftstreifen zum Halten des geklappten Zustands, in dem während des Bedruckens der Klappabschnitt 24 an dem Haftstreifen anhaftet. Nach dem Bedrucken kann das Beschriftungsmaterial 2 in die in Fig. 5 gezeigte Position aufgeklappt werden. Der Haftstreifen kann anschließend insbesondere rückstandsfrei entfernt werden.

Weiter hat die in Fig. 5 beschriebene Variante des Beschriftungsmaterials 2 eine Umfalthilfe 36 mit der Höhe H3, die eine Sollklappstelle zum Umklappen des Klappabschnitts 24 auf den Druck- bzw. Beschriftungsabschnitt 26 vorgibt. Die Umfalthilfe 36 kann alternativ als Ausstanzung oder lokale Verjüngung zwischen dem Klappabschnitt und dem Beschriftungsabschnitt ausgestaltete sein. Die Umfalthilfe 36 ist über die gesamte, entlang der x-Achse gemessene Längserstreckung des Beschriftungsmaterials 2 erstreckt. Die Umfalthilfe 36 bildet vorliegend ein Filmscharnier 36. Gemäß alternativer Ausführungsbeispiele kann eine Umfalthilfe als geradelinig in x-Richtung erstreckte lokale Schwächung, wie eine Perforation oder dergleichen, oder als Vorfaltung gebildet sein.

### Bezugszeichen

- 2: Beschriftungsmaterial
- 4: Beschriftungsbereich
- 6: Trägerschicht
- 8: erste Seite
- 10: Klebeschicht
- 12: Bedruckschicht
- 14: Abziehfolie
- 16: Lasche
- 18: zweite Seite
- 20: Klebeschicht
- 22: Stützschicht
- 24: Klappabschnitt
- 26: Druckabschnitt / Beschriftungsabschnitt
- 28: Objekt
- 30: Haftstreifen
- 32: Längskante
- 34: Längskante
- 36: Umfalthilfe
- H1: Höhe
- H2: Höhe
- z: Höhenrichtung
- x: Längsrichtung
- y: Dickenrichtung

## Patentansprüche

1. Beschriftungsmaterial,
- mit einem Beschriftungsbereich (4), der zum Bedrucken mit einer Druckvorrichtung und/oder zum handschriftlichen Beschriften eingerichtet ist,
- mit einer Trägerschicht (6), die zumindest abschnittsweise transparent ist und die zum Abdecken oder Versiegeln des Beschriftungsbereichs auf den Beschriftungsbereich (4) umklappbar und mit diesem abschnittsweise oder vollflächig verklebbar ist,
- mit einem oder mehreren Klebebereichen (10), wie einer Klebeschicht, Klebepunkten, Klebestreifen oder dergleichen, die zum abschnittsweisen oder vollflächigen Verkleben der zumindest abschnittsweise transparenten Trägerschicht (6) mit dem Beschriftungsbereich (4) eingerichtet ist,
- wobei der Klebebereich (10) und der Beschriftungsbereich (4) auf derselben Seite (8) der zumindest abschnittsweise transparenten Trägerschicht (6) angeordnet sind,
**dadurch gekennzeichnet, dass**
- das Beschriftungsmaterial einen lösbaren Haftstreifen (30) aufweist,
- wobei der lösbare Haftstreifen (30) Längskanten (32, 34) der Trägerschicht (6) in einem geklappten Grundzustand der Trägerschicht fixiert,
- wobei die Trägerschicht (6) in dem geklappten Grundzustand im Querschnitt betrachtet insbesondere mittig gefaltet ist.

2. Beschriftungsmaterial nach Anspruch 1,
**dadurch gekennzeichnet, dass**
- der Beschriftungsbereich (4) und der Klebebereich (10) in einem aufgeklappten Zustand, in dem der Klebebereich nicht mit dem Beschriftungsbereich verklebt ist, zueinander benachbart und aneinander angrenzend angeordnet sind und/oder
- der Beschriftungsbereich (4) in einem Querschnitt betrachtet eine Höhe (H1) aufweist, die einer Höhe (H2) eines auf den Beschriftungsbereich umklappbaren Klappabschnitts (24) entspricht.

3. Beschriftungsmaterial nach Anspruch 1 oder 2,
**dadurch gekennzeichnet, dass**
- der Beschriftungsbereich (4) durch eine Bedruckschicht (12) gebildet ist, die auf die Trägerschicht (6) aufgebracht ist.

4. Beschriftungsmaterial nach Anspruch 3,
**dadurch gekennzeichnet, dass**
- die Bedruckschicht (12) eine einlagige Folie (12) ist oder
- die Bedruckschicht (12) eine mehrlagige Folie ist oder
- die Bedruckschicht (12) eine Beschichtung ist.

5. Beschriftungsmaterial nach einem der Ansprüche 1 bis 4,
**dadurch gekennzeichnet, dass**
- die zumindest abschnittsweise transparente Trägerschicht (6) eine einlagige Folie (6) ist
oder
- die zumindest abschnittsweise transparente Trägerschicht (6) eine mehrlagige Folie ist.

6. Beschriftungsmaterial nach einem der Ansprüche 1 bis 5,
**dadurch gekennzeichnet, dass**
- die Trägerschicht (6) vollständig aus einem transparenten Material gebildet ist.

7. Beschriftungsmaterial nach einem der Ansprüche 1 bis 6,
**gekennzeichnet durch**
- ein Deckblatt (14), wie eine Abziehfolie (14) oder dergleichen,
- wobei der Klebebereich (10), der zum Verkleben der zumindest abschnittsweise transparenten Trägerschicht (6) mit dem Beschriftungsbereich (4) mit dem Deckblatt (14) bedeckt ist, und
- wobei das Deckblatt (14) zum Freilegen des Klebebereichs (10) entfernbar ist.

8. Beschriftungsmaterial nach einem der Ansprüche 1 bis 7,
**dadurch gekennzeichnet, dass**
- das Deckblatt (14) eine Ablösehilfe aufweist, wie eine Lasche (16), einen Schlitz oder dergleichen.

9. Beschriftungsmaterial nach einem der Ansprüche 1 bis 8,
**gekennzeichnet durch**
- einen weiteren Klebebereich (20) zum Befestigen des Beschriftungsmaterials (2) an einem zu markierenden Objekt (28),
- wobei der Klebebereich (20) auf einer dem Beschriftungsbereich (4) abgewandten Seite (18) der Trägerschicht (6) angeordnet ist,
- insbesondere, dass der weitere Klebebereich (20) auf Höhe des Beschriftungsbereichs (4) oder, in einem aufgeklappten Zustand, auf Höhe eines Klappabschnitts (24) angeordnet ist.

10. Beschriftungsmaterial nach Anspruch 9,
**dadurch gekennzeichnet, dass**
- der weitere Klebebereich (18) von einem Deckblatt (22) bedeckt ist, das zum Freilegen des weiteren Klebebereichs (20) entfernbar ist.

11. Beschriftungsmaterial nach Anspruch 9 oder Anspruch 10, **dadurch gekennzeichnet,**
- **dass** die Trägerschicht (6) einen Klappabschnitt (24) hat, der zum Abdecken des Beschriftungsbereichs (4) auf den Beschriftungsbereich (4) umklappbar und mit diesem verklebbar ist,
- wobei der Klebebereich (10), der zum Verkleben der zumindest abschnittsweise transparenten Trägerschicht (6) mit dem Beschriftungsbereich (4) eingerichtet ist, an dem Klappabschnitt (24) vorgesehen ist, und
- wobei der Klappabschnitt (24) auf einer dem Klebebereich (10) abgewandten Seite (18) der Trägerschicht (6) keinen Klebebereich aufweist,
- und **dass** die Trägerschicht (6) einen Druckabschnitt (26) hat,
- der in einer Höhenerstreckung (z) des Beschriftungsmaterials (2) betrachtet benachbart zu und angrenzend an den Klappbereich (24) angeordnet ist,
- wobei der Beschriftungsbereich (4) an dem Druckabschnitt (26) vorgesehen ist,
- wobei der weitere Klebebereich (20) auf einer dem Beschriftungsbereich (4) abgewandten Seite (18) des Druckabschnitts (26) angeordnet ist, und
- wobei der weitere Klebebereich (20) und der Bereich des Klappabschnitts (24), der keinen Klebebereich aufweist, zueinander benachbart und aneinander angrenzend abgeordnet sind.

12. Beschriftungsmaterial nach einem der Ansprüche 1 bis 11, **dadurch gekennzeichnet, dass**
- das Beschriftungsmaterial (2) eine Metallkomponente aufweist, wie eine oder mehrere metallische Lagen, Metallpartikel, Metallfäden oder dergleichen.

## Claims

1. Labeling material,
- comprising a labeling region (4) which is designed to be printed using a printing device and/or for handwritten labeling,
- comprising a carrier layer (6) which is at least partially transparent and can be folded over onto the labeling region (4) to cover or seal the labeling region and can be bonded thereto in portions or over the entire surface,
- comprising one or more adhesive regions (10), such as an adhesive layer, adhesive dots, adhesive strips or the like, which are designed to bond the at least partially transparent carrier layer (6) to the labeling region (4) in portions or over the entire surface,
- the adhesive region (10) and the labeling region (4) being arranged on the same side (8) of the at least partially transparent carrier layer (6),
**characterized in that**
- the labeling material has a detachable adhesive strip (30),
- the detachable adhesive strip (30) fixing longitudinal edges (32, 34) of the carrier layer (6) in a folded basic state of the carrier layer,
- the carrier layer (6) being in particular folded in the center in the folded basic state, when viewed in cross section.

2. Labeling material according to claim 1,
**characterized in that**
- the labeling region (4) and the adhesive region (10) are adjacent to one another and adjoin one another in an unfolded state, in which the adhesive region is not bonded to the labeling region, and/or
- the labeling region (4), when viewed in a cross section, has a height (H1) which corresponds to a height (H2) of a flap portion (24) which can be folded over onto the labeling region,

3. Labeling material according to either claim 1 or claim 2,
**characterized in that**
- the labeling region (4) is formed by a printing layer (12) which is applied to the carrier layer (6).

4. Labeling material according to claim 3,
**characterized in that**
- the printing layer (12) is a single-layer film (12)
or
- the printing layer (12) is a multi-layer film
or
- the printing layer (12) is a coating.

5. Labeling material according to any of claims 1 to 4,
**characterized in that**
- the at least partially transparent carrier layer (6) is a single-layer film (6) or
- the at least partially transparent carrier layer (6) is a multi-layer film.

6. Labeling material according to any of claims 1 to 5,
**characterized in that**
- the carrier layer (6) is made of a transparent material in its entirety.

7. Labeling material according to any of claims 1 to 6,
**characterized by**
- a cover sheet (14), such as a peel-off film (14) or the like,
- the adhesive region (10), which is covered with the cover sheet (14) for bonding the at least partially transparent carrier layer (6) to the labeling region (4), and
- the cover sheet (14) being removable in order to expose the adhesive region (10).

8. Labeling material according to any of claims 1 to 7,
**characterized in that**
- the cover sheet (14) has a removal aid, such as a tab (16), a slot or the like.

9. Labeling material according to any of claims 1 to 8,
**characterized by**
- an additional adhesive region (20) for attaching the labeling material (2) to an object (28) to be marked,
- the adhesive region (20) being arranged on a side (18) of the carrier layer (6) facing away from the labeling region (4),
- in particular, the additional adhesive region (20) being arranged at the level of the labeling region (4) or, in an unfolded state, at the level of a flap portion (24).

10. Labeling material according to claim 9,
**characterized in that**
- the additional adhesive region (18) is covered by a cover sheet (22) which can be removed to expose the additional adhesive region (20).

11. Labeling material according to either claim 9 or claim 10,
**characterized in that**
- the carrier layer (6) has a flap portion (24) which can be folded over onto and bonded to the labeling region (4) in order to cover the labeling region (4),
- the adhesive region (10), which is designed for bonding the at least partially transparent carrier layer (6) to the labeling region (4), being provided on the flap portion (24), and
- the flap portion (24) not having an adhesive region on a side (18) of the carrier layer (6) facing away from the adhesive region (10),
- **and in that** the carrier layer (6) has a printing portion (26),
- which, when viewed in a height extension (z) of the labeling material (2), is adjacent to and adjoins the flap region (24),
- the labeling region (4) being provided on the printing portion (26),
- the additional adhesive region (20) being arranged on a side (18) of the printing portion (26) facing away from the labeling region (4), and
- the additional adhesive region (20) and the region of the flap portion (24) which does not have an adhesive region being adjacent to one another and adjoining one another.

12. Labeling material according to any of claims 1 to 11,
**characterized in that**
- the labeling material (2) has a metal component, such as one or more metal layers, metal particles, metal threads or the like.

## Revendications

1. Matériau pour inscription,
- comportant une zone d'inscription (4), qui est conçue pour l'impression avec un dispositif d'impression et/ou pour l'inscription manuscrite,
- comportant une couche de support (6) qui est transparente au moins par sections et qui peut être rabattue sur la zone d'inscription (4) pour le recouvrement ou le scellement de la zone d'inscription et peut être collée avec celle-ci par sections ou sur toute sa surface,
- comportant une ou plusieurs zones de collage (10), telles qu'une couche de colle, des points de colle, des bandes de colle ou similaires, qui est conçue pour le collage, par sections ou sur toute la surface, de la couche de support (6) transparente au moins par sections avec la zone d'inscription (4),
- dans lequel la zone de colle (10) et la zone d'inscription (4) sont disposées sur le même côté (8) de la couche de support (6) transparente au moins par sections,
**caractérisé en ce que**
- le matériau d'inscription présente une bande adhésive détachable (30),
- dans lequel la bande adhésive détachable (30) fixe des bords longitudinaux (32, 34) de la couche de support (6) dans un état de base replié de la couche de support,
- dans lequel la couche de support (6), vue en coupe transversale, est pliée en particulier au milieu dans l'état de base replié.

2. Matériau d'inscription selon la revendication 1,
**caractérisé en ce que**
- la zone d'inscription (4) et la zone de colle (10) sont disposées de manière adjacente et contiguë l'une à l'autre dans un état déplié dans lequel la zone de colle n'est pas collée à la zone d'inscription et/ou
- la zone d'inscription (4), vue en coupe transversale, présente une hauteur (H1) qui correspond à une hauteur (H2) d'une section rabattable (24) pouvant être rabattue sur la zone d'inscription.

3. Matériau d'inscription selon la revendication 1 ou 2,
**caractérisé en ce que**
- la zone d'inscription (4) est formée par une couche d'impression (12) qui est appliquée sur la couche de support (6),

4. Matériau d'inscription selon la revendication 3,
**caractérisé en ce que**
- la couche d'impression (12) est un film monocouche (12)
ou
- la couche d'impression (12) est un film multicouche
ou
- la couche d'impression (12) est un revêtement.

5. Matériau d'inscription selon l'une des revendications 1 à 4,
**caractérisé en ce que**
- la couche de support (6) transparente au moins par sections est une feuille monocouche (6)
ou
- la couche de support (6) transparente au moins par sections est un film multicouche.

6. Matériau d'inscription selon l'une des revendications 1 à 5,
**caractérisé en ce que**
- la couche de support (6) est entièrement formée d'un matériau transparent.

7. Matériau d'inscription selon l'une des revendications 1 à 6,
**caractérisée par**
- une feuille de couverture (14), telle qu'une feuille détachable (14) ou similaire,
- dans lequel la zone de colle (10), qui est recouverte par la feuille de couverture (14) pour le collage de la couche de support (6) transparente au moins par sections avec la zone d'inscription (4), et
- dans lequel la feuille de couverture (14) peut être retirée pour l'exposition de la zone de colle (10),

8. Matériau d'inscription selon l'une des revendications 1 à 7,
**caractérisé en ce que**
- la feuille de couverture (14) présente une aide au détachement, telle qu'une languette (16), une fente ou similaire.

9. Matériau d'inscription selon l'une des revendications 1 à 8,
**caractérisée par**
- une autre zone de colle (20) pour la fixation du matériau d'inscription (2) à un objet (28) à marquer,
- dans lequel la zone de colle (20) est disposée sur un côté (18) de la couche de support (6) opposé à la zone d'inscription (4),
- en particulier **en ce que** l'autre zone de colle (20) est disposée à la hauteur de la zone d'inscription (4) ou, dans un état déplié, à la hauteur d'une section rabattable (24),

10. Matériau d'inscription selon la revendication 9,
**caractérisé en ce que**
- l'autre zone de colle (18) est recouverte d'une feuille de couverture (22) qui peut être retirée pour l'exposition de l'autre zone de colle (20).

11. Matériau d'inscription selon la revendication 9 ou la revendication 10,
**caractérisé en ce que**
- la couche de support (6) a une section rabattable (24) qui peut être rabattue sur la zone d'inscription (4) et collée à celle-ci pour le recouvrement de la zone d'inscription (4),
- dans lequel la zone de colle (10), qui est conçue pour le collage de la couche de support (6) transparente au moins par sections avec la zone d'inscription (4), est prévue sur la section rabattable (24) et
- dans lequel la section rabattable (24) ne présente pas de zone de colle sur un côté (18) de la couche de support (6) opposé à la zone de colle (10),
- **et en ce que** la couche de support (6) a une section d'impression (26),
- qui, vue dans une extension en hauteur (z) du matériau d'inscription (2), est disposée de manière adjacente et contiguë à la zone rabattable (24),
- dans lequel la zone d'inscription (4) est prévue sur la section d'impression (26),
- dans lequel l'autre zone de colle (20) est disposée sur un côté (18) de la section d'impression (26) opposé à la zone d'inscription (4), et
- dans lequel l'autre zone de colle (20) et la zone de la section rabattable (24) qui ne présente pas de zone de colle sont disposées de manière adjacente et contiguë l'une à l'autre.

12. Matériau d'inscription selon l'une des revendications 1 à 11,
**caractérisé en ce que**
- le matériau d'inscription (2) présente un composant métallique, tel qu'une ou plusieurs couches métalliques, des particules métalliques, des fils métalliques ou analogues.
